# EUROPEAN PATENT SPECIFICATION

(11) **EP 4 183 625 B1**
(45) Date of publication and mention of the grant of the patent: **16.04.2025**
(21) Application number: 21209561.6
(22) Date of filing: 22.11.2021
(51) Int. Cl.: B60N 2/90, F04B 39/08, F04B 45/04, F04B 45/047, F04B 53/10

(54) **PUMP VALVE ARRANGEMENT**
PUMPENVENTILANORDNUNG
AGENCEMENT DE VANNE DE POMPE

(43) Date of publication of application: 24.05.2023
(73) Proprietor: FICO CABLES LDA, 4470-263 Vermoim-Maia (PT)
(72) Inventor: DE CASTRO FARIA, Manuel António, 4470-263 Vermoim-Maia (PT); DA SILVA LOPES, Pedro João, 4470-263 Vermoim-Maia (PT); GONÇALVES SILVA, David Manuel, 4470-263 Vermoim-Maia (PT)
(74) Representative: Bardehle Pagenberg Partnerschaft mbB Patentanwälte Rechtsanwälte

(56) References cited:
- EP-A1- 3 462 021
- WO-A1-98/45633
- CN-A- 110 809 359
- US-A1- 2006 147 329
- US-A1- 2019 099 774
- US-B1- 8 485 793

## Description

### 1. Technical field

The invention relates to a pump valve arrangement, particularly for providing compressed air to an air bladder of an automotive comfort system within an automotive seat. Such comfort systems are used for shaping the seat cushion or backrest of an automotive seat according to passengers needs or for providing a massage function.

### 2. Prior art

Automotive comfort systems with air bladders for shaping the seat cushion or the backrest of an automotive seat are known. Presently such comfort systems comprise motor actuated air pumps that supply compressed air to fill air bladders with the desired amount of air. Further, the filling and release of air of such air bladders is usually controlled by solenoid air valves.

Further, the document DE 11 2007 003 767 B4 discloses generally a pump on a piezoelectric basis that is used for filling an air bladder within a headrest of a vehicle seat.

The documents EP 3 462 021A1 and US 2019/099774 A1 disclose miniature integrated fluid systems produced by an integrated method. The miniature fluid systems are applicable for example in micro pumps, micro atomizers, print heads or industrial printers.

The document US 2006/147329 A1 discloses a piezoelectric pump in which the common passive one-way inlet and outlet valves are replaced by an actively inlet valve and active outlet valve. The active valves can be electrically actuated and controlled.

The document WO 98/45633 A1 discloses a multi-valve module having a ceramic piezoelectric actuator for a seat having a pneumatically controlled air cell.

However, there is still a need to further improve automotive comfort systems comprising air bladders.

### 3. Summary of the invention

The above-mentioned problem is solved by a pump valve arrangement according to claim 1 and by a comfort system for a vehicle seat according to claim 15.

Particularly, the above mentioned problem is solved by a pump valve arrangement for providing compressed air to air bladders of an automotive comfort system within a vehicle seat, the pump valve arrangement comprising a piezoelectrically actuated air pump for providing compressed air, the air pump comprising at least one piezoelectric element for actuating the air pump; a plurality of electrically actuated air valves for selectively filling, holding the pressure and releasing air from the air bladders, wherein the air valves are in fluid connection with the air pump; a housing; and a printed circuit board that is arranged within the housing, and the air valves are electrically connected to the printed circuit board; wherein the air valves are arranged within the housing; and the air pump and the air valves are mounted adjacent to each other without relative movement.

The pump valve arrangement provides an integration of all mechanical components for filling, holding the pressure and releasing a plurality of air bladders of an automotive comfort system within one integrated unit. This integration into a structural unit saves additional parts and mounting effort. Further, the pump valve arrangement unit due to the integration requires less space than conventional solutions. Since the air pump is piezoelectrically actuated by its piezoelectric element, large and costly mechanical parts, like electric pump motors or mechanical pumps can be saved. This particularly decreases the overall weight compared to standard pumps and valve arrangements and further decreases costs and space consumption. Further, the air pump and the air valves can be actuated by a common control electronics since they are mounted adjacent to each other and without relative movement. This reduces effort for the actuation electronics as well as mounting and wiring effort.

Preferably, the air pump are electrically connected to the printed circuit board. The printed circuit board provides electrical control signals to the air pump and the air valves.

Preferably, at least one of the air pump and the air valves are additionally mechanically connected to the printed circuit board. In addition to electrically controlling the air pump and/or the air valves the printed circuit board can also mechanically support these elements. Thus, the printed circuit board can be the only element mechanically holding the air pump and/or the air valves and replace other mechanical holding elements. This is particularly useful as a piezoelectrically actuated air pump is very lightweight. The pump may be fixed on the printed circuit board with its soldered contacts for ease of construction. This may further provide an overall smaller pump valve arrangement.

Preferably, the air pump and/or the air valves are mechanically connected to the housing. The air pump and the air valves can also be connected to the housing for additional mechanical stability.

Preferably, the air pump is mechanically connected to the printed circuit board and/or to the housing by at least one screw and/or welded plastic pin and/or soldered electrical pin and/or rivet and/or glue. These mounting elements provide a stable mechanical connection for the air pump and are easy to produce, particularly since the air pump is very lightweight such that only small dimensions of the mounting elements are required.

Preferably, the fluid connection length between the air pump and the air valves is 100 mm or less, preferably 50 mm or less, or preferably 30 mm or less, or preferably 20 mm or less, or preferably 10 mm or less. Since the piezoelectrically actuated air pump is small compared to ordinary air pumps it can be easily arranged close to the arrangement of the air valves. Thus, the fluid connection between the air pump and the air valves can be very short.

Preferably, the air pump is mounted within the housing. Thus, a pump valves unit is provided that can be integrated as one piece into the vehicle seat, preferably directly into the backrest.

Preferably, the air pump is arranged outside the housing. If the air pump is arranged outside the housing a smaller housing and more design flexibility can be obtained.

Preferably, the air pump is fluidly connected to the air valves via a tube. The connection between the air pump and the air valves can be established by a tube, preferably by an elastic tube. This again increases the design flexibility.

Preferably, the air pump is mounted on an outer side of the housing.

Preferably, the air pump and the housing are both connected to a common protection plate. The connection plate can be mounted within the vehicle seat, preferably within the backrest of the vehicle seat, at an appropriate position and carry the air pump and the housing with the valves inside.

Preferably, the air pump is a double action piezoelectric air pump comprising a piezoelectric membrane that separates two air chambers within the air pump. A piezoelectric membrane integrates the function of the membrane with the piezoelectric actuation in one single element. The piezoelectric membrane is arranged to compress air if a corresponding electrical voltage is applied. Thus, no additional air membrane or air piston or the like are necessary in the air pump, what makes the pump valve arrangement very reliable and robust. In a double action piezoelectric air pump the piezoelectric membrane commonly actuates two pump air chambers and pumps air in both movement directions. This minimizes the components of the pump portion and doubles the pumping power of the pump piezoelectric element.

Preferably, the air pump comprises two air outlets which are connected to the air valves via an air connector having two air inlets and one air outlet. The air connector preferably connects the two air chambers of the double action piezoelectric air pump and provides for a single air outlet. Preferably, the pump valve arrangement further comprises a control electronics for controlling the air pump and/or the air valves, wherein the control electronics is arranged within the housing and/or is mounted to the printed circuit board. Thus, the pump valve arrangement is a unit that provides all functions for controlling the air volume or air pressure within a plurality of air bladders within a vehicle seat.

### 4. Short description of the drawings

In the following, preferred embodiments of the invention are disclosed by reference to the accompanying figures, in which shows:
- Fig. 1: a three-dimensional view of a preferred embodiment of a pump valve arrangement fluidly connected to air bladders, without upper half of the housing;
- Fig. 2:: a three-dimensional view of the pump valve arrangement of Fig. 1;
- Fig. 3: a three-dimensional sectional view of a preferred embodiment of a pump valve arrangement showing a connection of an air pump to a printed circuit board;
- Fig. 4: a three-dimensional sectional view of a preferred embodiment of a pump valve arrangement showing another connection of an air pump to a printed circuit board;
- Fig. 5: a three-dimensional sectional view of a preferred embodiment of a pump valve arrangement showing a further connection of an air pump to a printed circuit board;
- Fig. 6:: a three-dimensional view of a further embodiment of the pump valve arrangement;
- Fig. 7:: a three-dimensional view of a further embodiment of the pump valve arrangement;
- Fig. 8:: a three-dimensional view of an embodiment of a piezoelectrically actuated air pump;
- Fig. 9:: a three-dimensional view of an embodiment of an air connector;
- Fig. 10:: a schematic side view of a vehicle seat with an air comfort system having a pump valve arrangement; and
- Fig. 11:: a schematics for a pneumatics of an embodiment of a pump valve arrangement.

### 5. Description of preferred embodiments

In the following preferred embodiments of the invention are described with respect to the figures.

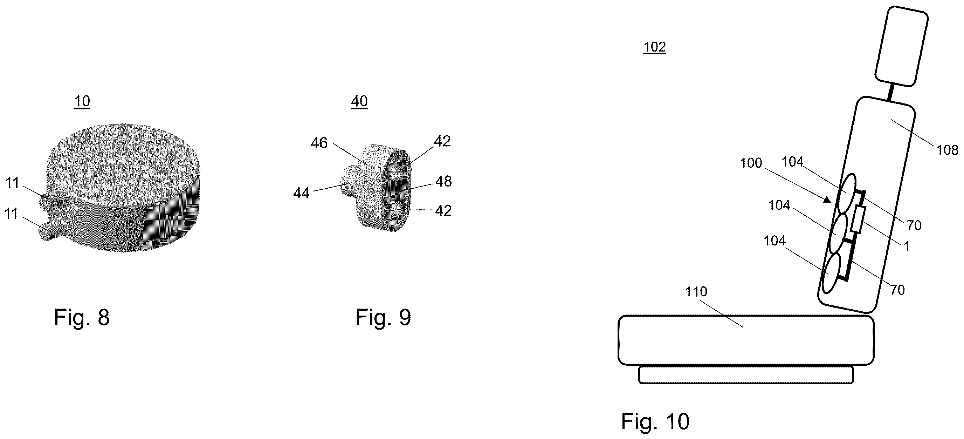

As shown in Fig. 10 a pump valve arrangement 1 is part of a comfort system 100 arranged within the backrest 108 or a seat cushion 110 of an automotive seat 102. Preferably, the pump valve arrangement 1 is connected to a plurality of air bladders 104 of the comfort system 100 via air conduits 70 and provides for a controlled inflation and deflation of the air bladders 104. The pump valve arrangement 1 has the following functionality: An air pump 10 takes in air from the ambient, compresses it to some extend and provides this compressed air to the filling air valves 20. A selected one of the filling air valves 20 opens electrically and provides the compressed air to a respective air bladder 104 via a respective air conduit 70. If the respective filling air valve 20 closes the air pressure is maintained within the respective air bladder 104. Further, the pump valve arrangement 1 is able to release the air in a controlled manner from the air bladder 104 to the ambient by opening a selected one of electrically actuated release air valves 22.

The filling air valves 20 and the release air valves 22 could be of the same type or be the same valves. Preferably, the filling air valves 20 and the release air valves 22 are 2/2-way valves, 3/2-way valves or 3/3-way valves. In other embodiments the filling air valves 20 may be of a different type than the release air valves 22. In a preferred embodiment the filling air valves 20 and the release air valves 22 are preferably 2/2-way solenoid valves.

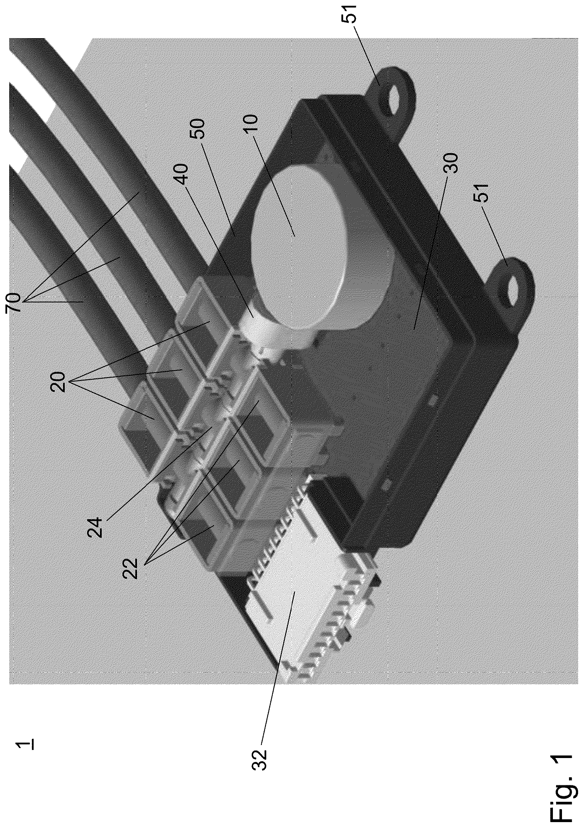

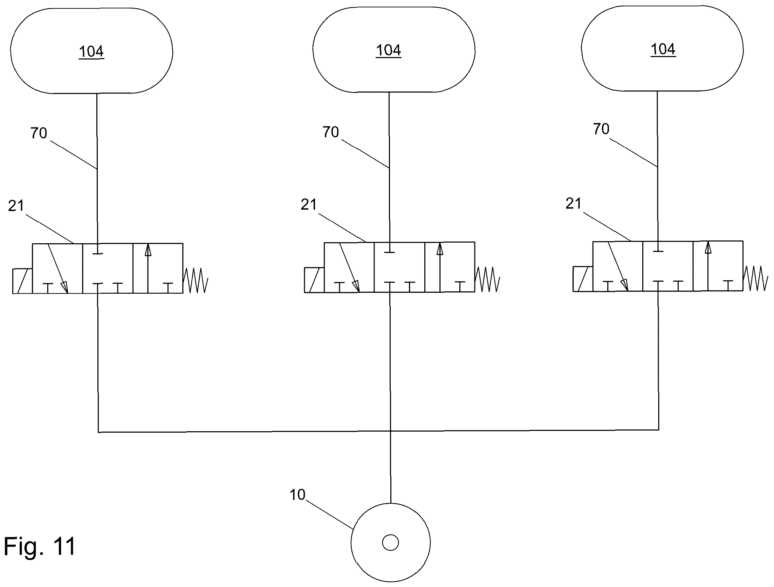

In a further embodiment shown in Fig. 11 the pump valve arrangement 1 comprises three 3/3-way valves 21, preferably three 3/3-way solenoid valves 21. In this embodiment one 2/2-way filling air valve 20 and one 2/2-way release air valve 22 of the embodiment of Fig. 1 are functionally combined into one 3/3-way air valve 21. Thus, for the filling and release of one air bladder 104 only one 3/3-way air valve 21 is necessary. This may reduce the size and complexity of the pump valve arrangement 1 compared to the embodiment of Fig. 1. Such 3/3-way air valves 21 can be used in any of the embodiments instead of the 2/2-way filling air valves 20 and the 2/2-way release air valves 22.

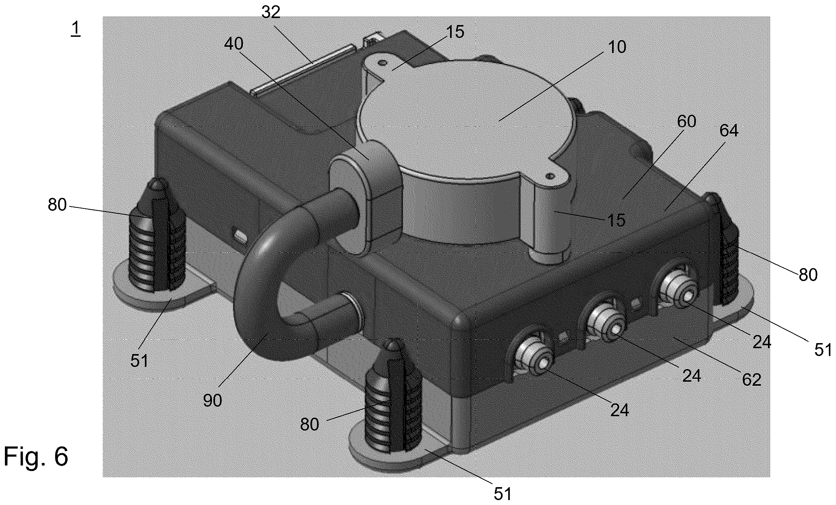

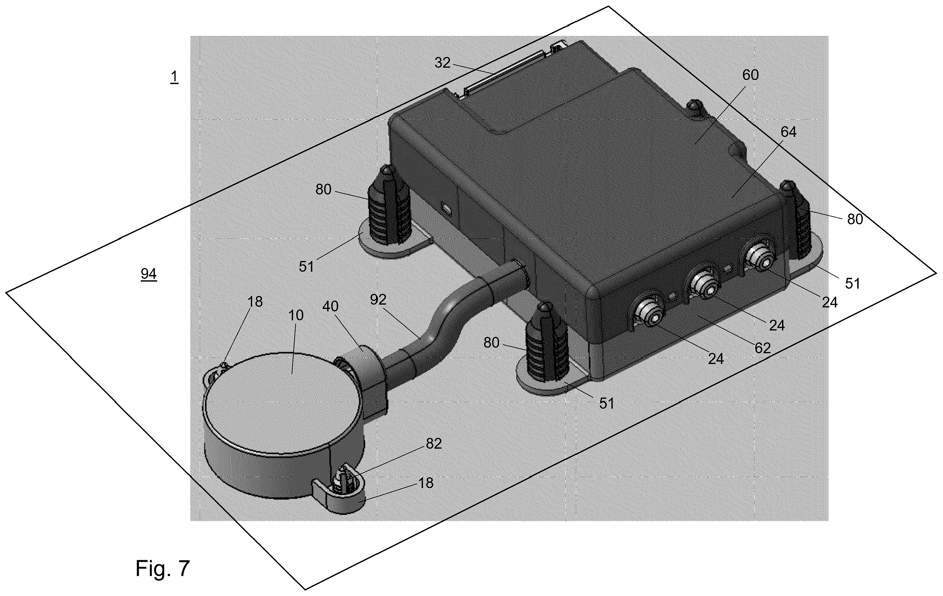

Figs. 1 shows a three-dimensional view of a pump valve arrangement 1 for supplying three air bladders 104 with compressed air. The pump valve arrangement 1 comprises a piezoelectrically actuated air pump 10 and three electrically actuated filling air valves 20 that are fluidly connected to the air pump 10. Further, the pump valve arrangement 1 comprises three electrically actuated release air valves 22 that are also fluidly connected to the air pump 10 and to a respective one of the conduits 70 to the air bladders 104. The conduits 70 are connected to respective air sockets 24 (see Fig. 6 and 7) of the filling air valves 20.

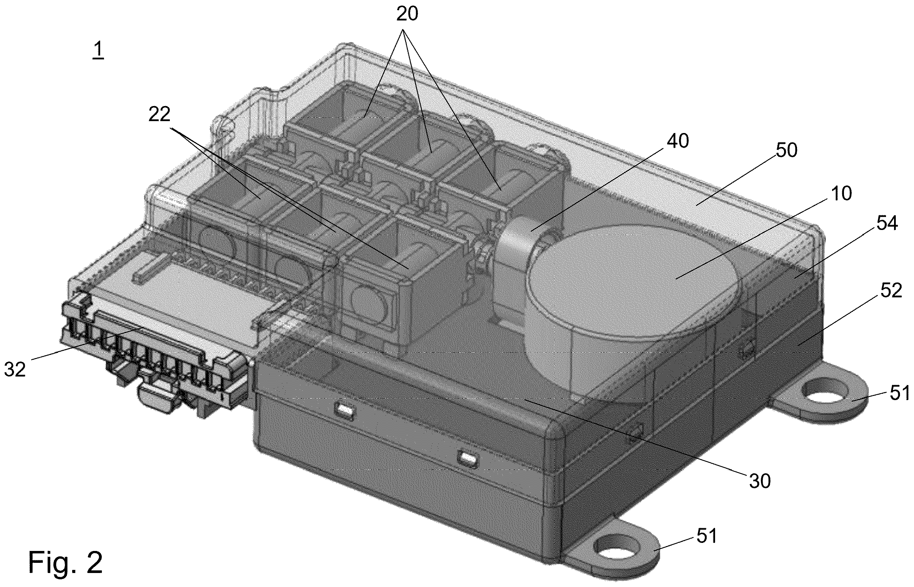

In the embodiment of Figs. 1 and 2 the air valves 20, 22 and the air pump 10 are electrically and mechanically connected to a common printed circuit board (PCB) 30. The printed circuit board 30 further comprises electric control electronics (not shown) and an electrical connector 32 for connecting the PCB 30 with an electric or electronic bus of the vehicle.

The pump valve arrangement 1 comprises a housing 50. The housing 50 can be opened and preferably comprises two housing halves 52, 54 (see Fig. 2), wherein in Fig. 1 only the lower housing half 52 is shown. In the embodiment of Fig. 1 the air pump 10 and the plurality of air valves 20, 22 are arranged within the housing 50. The housing 50 further comprises mounting eyes 51 that can be used to mount the pump valve arrangement 1 with the vehicle seat 10. The mounting eyes 51 can be used in combination with plastic fastener bolts 80 as shown in Fig. 6 or any other suitable mounting means.

The air pump 10 is piezoelectrically actuated. Thus, it comprises a piezoelectric element (not shown) that moves a piston or a membrane within the air pump 10. In a preferred embodiment the air pump 10 comprises a piezoelectric element in the form of a pump piezoelectric membrane that directly compresses air within the air pump.

Preferably, the air pump 10 is a double action piezoelectric air pump, wherein piezoelectric membrane that separates two air chambers within the air pump 10. In this embodiment the piezoelectric membrane separates the interior of the air pump into a first pump air chamber on one side of the pump piezoelectric membrane and a second pump air chamber on the other side of the pump piezoelectric membrane. The pump piezoelectric membrane is preferably a thin circular disc that is able to reciprocally deform or swing in two directions if a corresponding actuation voltage is applied to it. By this movement reciprocally an overpressure and an underpressure is generated in each of the two pump air chambers. The pump piezoelectric membrane is mounted by its periphery to side walls of the air chambers.

The double action piezoelectric air pump 10 comprises two air outlets 11, one for each of the two air chambers (see Fig. 8). An air connector 40 is provided for connecting the two air outlets 11 with the plurality of air valves 20, 22. The air connector 40 comprises two air inlets 42 that are fluidly connected to the air outlets 11 and one air outlet 44 that is fluidly connected to a distribution conduit 24 of the air valves 20, 22.

As shown in Fig. 9 the air connector 40 comprises a plastic housing 46 that forms a cavity and provides the air outlet 44. The air connector 40 further comprises an elastomeric insert 48 placed within the housing cavity, wherein the insert 48 forms the two air inlets 42. Due to the elastomeric insert 48 an air-tight connection of the air connector 40 to the air pump 10 is provided.

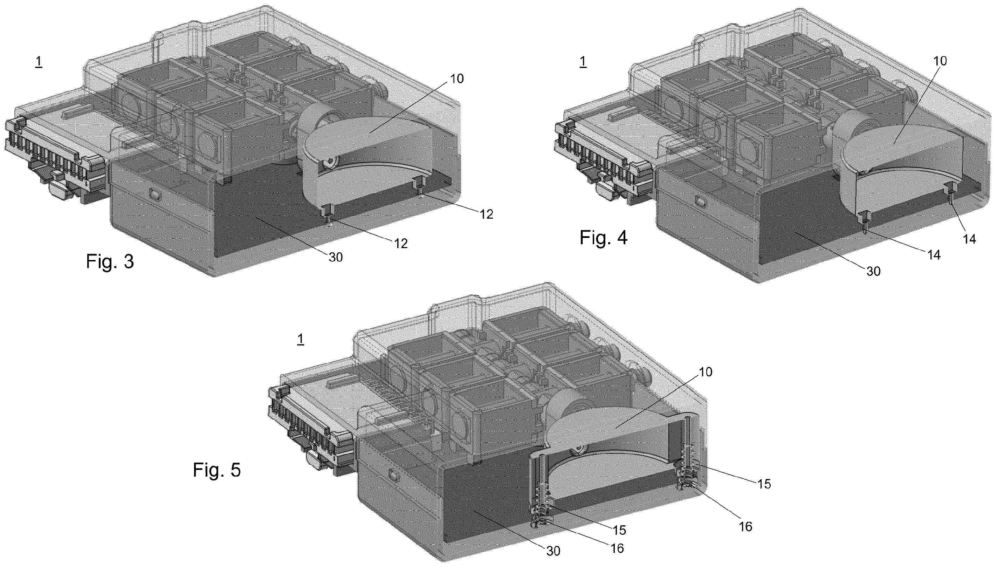

Figures 3, 4 and 5 show three different possibilities to mechanically mount the air pump 10 to the printed circuit board 30. In the embodiment of Fig. 3 the air pump 10 is mounted to the printed circuit board 30 via plastic pins 12 of the air pump 10. The plastic pins 12 extent through holes within the printed circuit board 30 and are heat welded at the underside of the printed circuit board 30 to form an expanded head. The plastic pins 12 only provide a mechanical connection of the air pump 10 with the printed circuit board 30. The electrical connection of the air pump 10 with the printed circuit board 30 is established separately, i.e with wires or electrical pins, like pins 14 (see Fig. 4).

In the embodiment of Fig. 4 the air pump 10 is mounted to the printed circuit board 30 via electrical pins 14 of the air pump 10. The electrical pins 14 are metallic and extend through holes in the printed circuit board 30 and are then welded from the underside of the printed circuit board to electric traces thereof. Thus, the soldered electrical pins 14 provide both an electric and a mechanical connection of the air pump 10 with the printed circuit board 30.

In the embodiment of Fig. 5 the air pump 10 is mounted to the printed circuit board 30 by screws 16. The screws 16 extend through holes of the printed circuit board 30 and are screwed from the underside of the printed circuit board 30 into receptacles 15 of the air pump 10. The screws 16 provides a mechanical connection of the air pump 10 with the printed circuit board 30. The electrical connection of the air pump 10 with the printed circuit board 30 is established separately, i.e. with wires or electrical pins, like pins 14 (see Fig. 4).

Figures 6 and 7 show further embodiments of a pump valve arrangement 1 in which the air pump 10 is mounted outside a housing 60. Unlike the housing 50 of Figs. 1 to 5 the housing 60 does not house the air pump 10 and can thus be smaller in size. The housing 60 comprises an upper 64 and a lower housing half 62 which are connected to each other. The housing 60 houses the printed circuit board 30 and the plurality of air valves 20, 22. The housing 60 comprises mounting eyes 51 for mounting the pump valve arrangement within the vehicle seat 102.

In the embodiment of Fig. 6 the air pump 10 is mounted on the outer side of the housing 60, preferably on the free side of the upper housing halve 64. Preferably the air pump 10 is mounted by screws that are screwed from the interior of the upper housing half 64 into receptacles 15 of the air pump 10. The receptacles 15 are part of the housing of the air pump 10 and are extending to the outside of the of the housing such that the air chambers withing the air pump 10 can have a preferably circular section which is optimal for a circular disc shaped piezoelectric membrane (not shown) of the air pump 10.

In the embodiment of Fig. 6 the outlet of the air connector 40 is connected to the air valves 20, 22 within the housing 60 via a tube 90. In the embodiment of Fig. 6 preferably a U-shaped tube 90 is used.

The fluid connection between the air pump 10 and the air valves 20, 22 is 100 mm or less, preferably 50 mm or less, or preferably 30 mm or less, or preferably 20 mm or less, or preferably 10 mm or less. In the embodiment of Fig. 6 the tube 90, which provides the fluid connection in this embodiment, has a length of ca. 30 mm.

In the embodiment of Fig. 7 the air pump 10 and the housing 60 are both connected to a common protection plate 94. The air pump 10 is preferably mounted to the protection plate 94 via plastic rivets or plastic fastener bolts 82 that are inserted into holes of the protection plate 94 and which extend into corresponding receptacles 18 of the air pump housing. Similarly, the housing 60 is mounted to the protection plate by plastic rivets or plastic fastener bolts 80. The protection plate 94 is mounted within the vehicle seat 102 at an appropriate position.

In the embodiment of Fig. 7 the outlet of the air connector 40 is connected to the air valves 20, 22 within the housing 60 via a tube 92. In this embodiment a Z-shaped tube 92 is used.

### List of reference signs:

- 1: pump valve arrangement
- 10: piezoelectrically actuated air pump
- 12: welded plastic pin
- 14: soldered electrical pin
- 15: screw receptacle
- 16: screw
- 18: fastener receptacle
- 20: filling air valves
- 21: air valves
- 22: release air valves
- 24: air sockets
- 30: printed circuit board
- 32: electrical connector
- 40: air connector
- 42: air inlets
- 44: air outlet
- 46: housing
- 48: insert
- 50, 60: housing
- 51: mounting eyes
- 70: air conduits
- 80, 82: plastic fastener bolts
- 90, 92: tube
- 94: protection plate
- 100: comfort system
- 102: vehicle seat
- 104: air bladders
- 108: backrest
- 110: seat cushion

## Claims

1. Pump valve arrangement (1) for providing compressed air to air bladders (104) of an automotive comfort system (100) within a vehicle seat (102), the pump valve arrangement (1) comprising:
a. a piezoelectrically actuated air pump (10) for providing the compressed air, the air pump (10) comprising at least one piezoelectric element for actuating the air pump (10);
b. a plurality of electrically actuated air valves (20, 21, 22) for selectively filling, holding the pressure and releasing air from the air bladders (104), wherein the air valves (20, 21, 22) are in fluid connection with the air pump (10);
c. a housing (50, 60); and
d. a printed circuit board (30) that is arranged within the housing (50, 60), and the air valves (20, 21, 22) are electrically connected to the printed circuit board (30); wherein
e. the air valves (20, 21, 22) are arranged within the housing (50, 60); and
f. the air pump (10) and the air valves (20, 21, 22) are mounted adjacent to each other without relative movement.

2. Pump valve arrangement according to claim 1, wherein the air pump (10) is electrically connected to the printed circuit board (30).

3. Pump valve arrangement according to claim 2, wherein at least one of the air pump (10) and the air valves (20, 21, 22) are additionally mechanically connected to the printed circuit board (30).

4. Pump valve arrangement according to one of the claims 1 to 3, wherein the air pump (10) and/or the air valves (20, 21, 22) are mechanically connected to the housing (50, 60).

5. Pump valve arrangement according to claim 4, wherein the air pump (10) is mechanically connected to the printed circuit board (30) and/or to the housing (50, 60) by at least one:
a. screw (16); and/or
b. welded plastic pin (12); and/or
c. soldered electrical pin (14); and/or
d. rivet; and/or
e. glue.

6. Pump valve arrangement according to claim 5, wherein a length of the fluid connection between the air pump (10) and the air valves (20, 22) is 100 mm or less, preferably 50 mm or less, or preferably 30 mm or less, or preferably 20 mm or less, or preferably 10 mm or less.

7. Pump valve arrangement according to one of the claims claim 2 to 6, wherein the air pump (10) is mounted within the housing (50).

8. Pump valve arrangement according to one of the claims 2 to 6, wherein the air pump (10) is arranged outside the housing (60).

9. Pump valve arrangement according to claim 8, wherein the air pump (10) is fluidly connected to the air valves (20, 21, 22) via a tube (90, 92).

10. Pump valve arrangement according to one of the claims 8 and 9, wherein the air pump (10) is mounted on an outer side of the housing (60).

11. Pump valve arrangement according to one of the claims 8 and 9, wherein the air pump (10) and the housing (60) are both connected to a common protection plate (94).

12. Pump valve arrangement according to one of the claims 1 to 11, wherein the air pump (10) is a double action piezoelectric air pump (10) comprising a piezoelectric membrane that separates two air chambers within the air pump (10).

13. Pump valve arrangement according to claim 12, wherein the air pump (10) comprises two air outlets (11) which are connected to the air valves (20, 21, 22) via an air connector (40) having two air inlets (42) and one air outlet (44).

14. Pump valve arrangement according to one of the claims 1 to 13, further comprising a control electronics for controlling the air pump (10) and/or the air valves (20, 21, 22), wherein the control electronics is arranged within the housing (50, 60) and/or is mounted to the printed circuit board (30).

15. Comfort system (100) for a vehicle seat (102), comprising a plurality of air bladders (104) fluidly connected to the pump valve arrangement (1) according to one of the claims 1 to 14.

## Patentansprüche

1. Pumpenventilanordnung (1) zum Bereitstellen von Druckluft für Luftblasen (104) eines Kraftfahrzeugkomfortsystems (100) in einem Fahrzeugsitz (102), wobei die Pumpenventilanordnung (1) Folgendes umfasst:
a. eine piezoelektrisch betätigte Luftpumpe (10) zum Bereitstellen der Druckluft, wobei die Luftpumpe (10) mindestens ein piezoelektrisches Element zum Betätigen der Luftpumpe (10) umfasst;
b. mehrere elektrisch betätigte Luftventile (20, 21, 22) zum selektiven Füllen, Halten des Drucks und Ablassen von Luft aus den Luftblasen (104), wobei die Luftventile (20, 21, 22) in Fluidverbindung mit der Luftpumpe (10) stehen;
c. ein Gehäuse (50, 60); und
d. eine gedruckte Leiterplatte (30), die in dem Gehäuse (50, 60) angeordnet ist, und wobei die Luftventile (20, 21, 22) elektrisch mit der gedruckten Leiterplatte (30) verbunden sind; wobei
e. die Luftventile (20, 21, 22) in dem Gehäuse (50, 60) angeordnet sind; und
f. die Luftpumpe (10) und die Luftventile (20, 21, 22) ohne Relativbewegung aneinander angrenzend montiert sind.

2. Pumpenventilanordnung nach Anspruch 1, wobei die Luftpumpe (10) elektrisch mit der gedruckten Leiterplatte (30) verbunden ist.

3. Pumpenventilanordnung nach Anspruch 2, wobei mindestens eines von der Luftpumpe (10) und den Luftventilen (20, 21, 22) zusätzlich mechanisch mit der gedruckten Leiterplatte (30) verbunden ist.

4. Pumpenventilanordnung nach einem der Ansprüche 1 bis 3, wobei die Luftpumpe (10) und/oder die Luftventile (20, 21, 22) mechanisch mit dem Gehäuse (50, 60) verbunden sind.

5. Pumpenventilanordnung nach Anspruch 4, wobei die Luftpumpe (10) mechanisch mit der gedruckten Leiterplatte (30) und/oder dem Gehäuse (50, 60) durch mindestens eins von Folgendem verbunden ist:
a. Schraube (16); und/oder
b. geschweißter Kunststoffstift (12); und/oder
c. gelöteter elektrischer Stift (14); und/oder
d. Niete; und/oder
e. Klebstoff.

6. Pumpenventilanordnung nach Anspruch 5, wobei eine Länge der Fluidverbindung zwischen der Luftpumpe (10) und den Luftventilen (20, 22) 100 mm oder weniger, vorzugsweise 50 mm oder weniger, oder vorzugsweise 30 mm oder weniger, oder vorzugsweise 20 mm oder weniger, oder vorzugsweise 10 mm oder weniger beträgt.

7. Pumpenventilanordnung nach einem der Ansprüche 2 bis 6, wobei die Luftpumpe (10) innerhalb des Gehäuses (50) montiert ist.

8. Pumpenventilanordnung nach einem der Ansprüche 2 bis 6, wobei die Luftpumpe (10) außerhalb des Gehäuses (60) angeordnet ist.

9. Pumpenventilanordnung nach Anspruch 8, wobei die Luftpumpe (10) über ein Rohr (90, 92) fluidisch mit den Luftventilen (20, 21, 22) verbunden ist.

10. Pumpenventilanordnung nach einem der Ansprüche 8 und 9, wobei die Luftpumpe (10) an einer Außenseite des Gehäuses (60) montiert ist.

11. Pumpenventilanordnung nach einem der Ansprüche 8 und 9, wobei die Luftpumpe (10) und das Gehäuse (60) beide mit einer gemeinsamen Schutzplatte (94) verbunden sind.

12. Pumpenventilanordnung nach einem der Ansprüche 1 bis 11, wobei die Luftpumpe (10) eine doppeltwirkende piezoelektrische Luftpumpe (10) ist, die eine piezoelektrische Membran umfasst, die zwei Luftkammern innerhalb der Luftpumpe (10) trennt.

13. Pumpenventilanordnung nach Anspruch 12, wobei die Luftpumpe (10) zwei Luftauslässe (11) umfasst, die über einen Luftverbinder (40) mit zwei Lufteinlässen (42) und einem Luftauslass (44) mit den Luftventilen (20, 21, 22) verbunden sind.

14. Pumpenventilanordnung nach einem der Ansprüche 1 bis 13, ferner umfassend eine Steuerelektronik zum Steuern der Luftpumpe (10) und/oder der Luftventile (20, 21, 22), wobei die Steuerelektronik innerhalb des Gehäuses (50, 60) angeordnet ist und/oder an der gedruckten Leiterplatte (30) montiert ist.

15. Komfortsystem (100) für einen Fahrzeugsitz (102), umfassend eine Vielzahl von Luftblasen (104), die fluidisch mit der Pumpenventilanordnung (1) nach einem der Ansprüche 1 bis 14 verbunden ist.

## Revendications

1. Agencement pompe-soupapes (1) pour délivrer de l'air comprimé à des vessies à air (104) d'un système de confort pour l'automobile (100) à l'intérieur d'un siège de véhicule (102), l'agencement de soupapes de pompe (1) comprenant :
a. une pompe à air à actionnement piézoélectrique (10) pour délivrer l'air comprimé, la pompe à air (10) comprenant au moins un élément piézoélectrique pour l'actionnement de la pompe à air (10) ;
b. une pluralité de soupapes à air à actionnement électrique (20, 21, 22) pour sélectivement remplir, maintenir la pression, et relâcher l'air des vessies à air (104), les soupapes à air (20, 21, 22) étant en liaison de fluide avec la pompe à air (10) ;
c. un boîtier (50, 60) ; et
d. une carte de circuit imprimé (30) qui est disposée à l'intérieur du boîtier (50, 60), et les soupapes à air (20, 21, 22) qui sont électriquement reliées à la carte de circuit imprimé (30) ; dans lequel
e. les soupapes à air (20, 21, 22) sont disposées à l'intérieur du boîtier (50, 60) ; et
f. la pompe à air (10) et les soupapes à air (20, 21, 22) sont montées adjacentes les unes par rapport aux autres sans déplacement relatif.

2. Agencement pompe-soupapes selon la revendication 1, dans lequel la pompe à air (10) est électriquement reliée à la carte de circuit imprimé (30).

3. Agencement pompe-soupapes selon la revendication 2, dans lequel au moins l'une d'entre la pompe à air (10) et les soupapes à air (20, 21, 22) sont en outre mécaniquement reliées à la carte de circuit imprimé (30).

4. Agencement pompe-soupapes selon l'une des revendications 1 à 3, dans lequel la pompe à air (10) et/ou les soupapes à air (20, 21, 22) sont mécaniquement reliées au boîtier (50, 60).

5. Agencement pompe-soupapes selon la revendication 4, dans lequel la pompe à air (10) est mécaniquement reliée à la carte de circuit imprimé (30) et/ou au boîtier (50, 60) par au moins :
a. une vis (16) ; et/ou
b. une broche en matière plastique soudée (12) ; et/ou
c. une broche électrique brasée (14) ; et/ou
d. un rivet ; et/ou
e. de la colle.

6. Agencement pompe-soupapes selon la revendication 5, dans lequel une longueur de la liaison de fluide entre la pompe à air (10) et les soupapes à air (20, 21, 22) est de 100 mm ou moins, de préférence de 50 mm ou moins, ou de préférence de 30 mm ou moins, ou de préférence de 20 mm ou moins, ou de préférence de 10 mm ou moins.

7. Agencement pompe-soupapes selon l'une des revendications 2 à 6, dans lequel la pompe à air (10) est montée à l'intérieur du boîtier (50).

8. Agencement pompe-soupapes selon l'une des revendications 2 à 6, dans lequel la pompe à air (10) est disposée hors du boîtier (60).

9. Agencement pompe-soupapes selon la revendication 8, dans lequel la pompe à air (10) est fluidiquement reliée aux soupapes à air (20, 21, 22) via un tube (90, 92).

10. Agencement pompe-soupapes selon l'une des revendications 8 et 9, dans lequel la pompe à air (10) est montée sur un côté externe du boîtier (60).

11. Agencement pompe-soupapes selon l'une des revendications 8 et 9, dans lequel la pompe à air (10) et le boîtier (60) sont tous deux reliés à une plaque de protection commune (94).

12. Agencement pompe-soupapes selon l'une des revendications 1 à 11, dans lequel la pompe à air (10) est une pompe à air piézoélectrique à double effet (10) comprenant une membrane piézoélectrique qui sépare deux chambres à air à l'intérieur de la pompe à air (10).

13. Agencement pompe-soupapes selon la revendication 12, dans lequel la pompe à air (10) comprend deux sorties d'air (11) qui sont reliées aux soupapes à air (20, 21, 22) via un connecteur à air (40) possédant deux entrées d'air (42) et une seule sortie d'air (44).

14. Agencement pompe-soupapes selon l'une des revendications 1 à 13, comprenant en outre une électronique de contrôle pour contrôler la pompe à air (10) et/ou les soupapes à air (20, 21, 22), l'électronique de contrôle étant disposée à l'intérieur du boîtier (50, 60) et/ou étant montée sur la carte de circuit imprimé (30).

15. Système de confort (100) pour un siège de véhicule (102), comprenant une pluralité de vessies à air (104) reliées fluidiquement à l'agencement pompe-soupapes (1) selon l'une des revendications 1 à 14.
